# EUROPÄISCHE PATENTSCHRIFT

(11) **EP 0 692 366 B1**
(45) Veröffentlichungstag und Bekanntmachung des Hinweises auf die Patenterteilung: **24.11.1999**
(21) Anmeldenummer: 95110258.1
(22) Anmeldetag: 01.07.1995
(51) Int. Cl.: B29C 51/42, B29C 51/16, B29B 13/02

(54) **Vorrichtung zum Beschichten von Werkstücken mit einer Folie**
Apparatus for coating workpiece surfaces with a foil
Dispositif pour revêtir d'un film une pièce

(30) Priorität: 06.07.1994 DE 9410797 U
(43) Veröffentlichungstag der Anmeldung: 17.01.1996
(73) Patentinhaber: Robert Bürkle GmbH, 72250 Freudenstadt (DE)
(72) Erfinder: Huber, Reinhard, D-72250 Freudenstadt (DE)
(74) Vertreter: Frank, Gerhard, Dipl.-Phys.

(56) Entgegenhaltungen:
- EP-A- 0 379 844
- DE-A- 1 604 424
- DE-A- 4 314 789
- PLASTVERARBEITER, Bd. 32, Nr. 8, 1981 SPEYER, Seiten 999-1002, W. A. NEITZERT 'Die Thermoformung dünnwandiger Teile'

## Beschreibung

Die Erfindung betrifft eine Vorrichtung nach dem Oberbegriff des Schutzanspruchs 1.

Eine gattungsgemäße Vorrichtung ist aus der EP 0 379 844 bekannt.

Zur Beschichtung von dreidimensionalen Körpern sind verschiedene Verfahren und Vorrichtungen bekannt:

So zeigt beispielsweise die DE-PS 11 83 353 ein Verfahren zur Überziehung gepolsterter Werkstücke mit einem Überzugsstoff, wobei eine erwärmte Membran auf diesen, auf das Werkstück aufgelegten Überzugsstoff aufgedrückt um das Werkstück gespannt wird, wozu das Volumen zwischen Membran und Werkstückunterlagen mit Vakuum beaufschlagt wird. Hierdurch wird gewährleistet, daß der Bezugsstoff auch den seitlichen Konturen des zu beziehenden Werkstückes weitgehend folgt und an den Rändern festgeklebt werden kann, die beheizbare Membran dient dabei hierzu, um den dafür erforderlichen Klebstoff an der Unterseite des Werkstückes zum Haften zu bringen.

Die DE-OS 38 27 497 beschreibt ein ähnliches Verfahren, wobe ebenfalls ein Druckkissen mit einer Membran eingesetzt wird, die mit Hilfe eines Druckmediums gegen die zu beschichtende Platte angedrückt wird. Die Beheizung der Folie erfolgt hierbei über die Membran, die mit Hilfe eines Vakuums an der Unterseite einer beheizten Grundplatte anliegt und somit auf deren Temperatur erwärmt wird. Die derart erwärmte Membran wird durch Anlegung einer Druckdifferenz zwischen ihrer Ober- und Unterseite dann über die Folie gelegt, wobei sie die in ihr gespeicherte Wärme während eines Zeitraums von einigen Minuten an die Folie abgibt, so daß diese dem Oberflächenverlauf der zu beschichtenden Platte folgen kann und mit der Oberfläche dieser Platte verklebt wird.

Während dieses Prozesses wird der Membran durch ein Luftumwälzprinzip weiter Wärme zugeführt, um die auftretenden Wärmeverluste nach Entfernung von der beheizten Grundplatte auszugleichen und eine Auskühlung zu verhindern. Nach der Verklebung der Platte wird die Druckdifferenz dann umgekehrt, so daß die Membran wieder in ihre Grundposition an der Unterseite der beheizten Grundplatte zurückkehrt und wieder auf die gewünschte Temperatur erwärmt werden kann.

Bei den beiden vorbekannten Vorrichtungen dient folglich die Membran zur "Druckübermittlung" auf die um das Werkstück herum zu legende Folie bzw. den Bezugsstoff. Wenn es sich bei der zu beschichtenden Folie um eine Kunststoffolie handelt, muß diese zwangsläufig vorgewärmt werden, wobei die Temperatur über die ganze Folienfläche möglichst gleichmäßig verteilt sein soll.

Die Verwendung einer Membranpresse gemäß der DE-OS 38 27 497, wo die Erwärmung der Folie über den Kontakt mit der vorgeheizten Membrane erfolgt, hat jedoch wesentliche Nachteile:

Je nach Art der verwendeten Folie kann diese unter Umständen an der Membran anhaften und von dieser beim Abheben der Membran beispielsweise an nicht vollständig überdeckten Klebebereichen wieder vom Werkstück abgezogen werden. Eventuelle zusätzliche Vorkehrungen, um dies zu vermeiden, verlängern den Beschichtungszyklus und verteuern den Prozeß.

Die Membran ist darüber hinaus ein teures Verschleißteil, insbesondere bei der Beschichtung relativ scharfkantiger Werkstücke verschleißt die Membran schnell, muß ausgetauscht werden und führt folglich ebenfalls zu einer Verteuerung der Produktion. Bei scharfkantigen Gegenständen sind auch Einschränkungen in der Beschichtungsqualität zu erwarten, da die, wenn auch geringe Eigensteifigkeit der Membran diese nicht in die Lage versetzt, sich auch bei scharfkantigen Ecken, Kanten oder Nutgründen exakt dem Querschnittsverlauf des zu beschichtenden Werkstückes anzupassen, so daß sich folglich dort auch unzulängliche Beschichtungsergebnisse mit unzureichenden Verklebungen einstellen können.

Die indirekte Erwärmung der Folie über die Membran hat weiterhin den Nachteil, daß die Temperaturführung der Folie bestenfalls angenähert den optimalen Bereich homogen über die Folienoberfläche überspannt, da die Membran eine Isolierschicht darstellt, mit der Folge, daß ihre Temperatur auf der Folienseite nicht exakt der Temperatur der Heizplatte und damit der Temperatur der Membranoberseite entspricht. Der Temperaturgradient durch die Membran hindurch muß ermittelt und bei der Aufheizung der Membran berücksichtigt werden, in jedem Fall ist somit lediglich eine "indirekte" Temperaturwahl möglich. Dies bedeutet aber auch, daß eine exakte Reproduzierbarkeit der Folienerwärmung bei aufeinanderfolgenden Beschichtungsvorgängen nur ungefähr möglich sein wird, mit der Folge einer ungleichmäßigen Serienfertigung, d.h., mit Produkten mit schwankender Beschichtungsqualität.

Bei der DE-OS 38 27 497 hat man diese Probleme offensichtlich erkannt und versucht die schwer beherrschbaren Temperaturverhältnisse mit den oben beschriebenen Nachteilen für die Fertigungsqualität dadurch zu reduzieren, indem man einen Kreislauf mit beheizter Luft vorsieht, der die Membranoberfläche (also die der Heizplatte zugewandte Oberfläche der Membran) mehr oder weniger notdürftig offenbar auf etwa der gleichen Temperatur halten soll, wie dies von der beheizten Grundplatte durchgeführt wurde. Es versteht sich von selbst, daß dies nur eine Notlösung sein kann, die zudem einen erheblichen apparativen Zusatzaufwand bedingt, der wiederum die Produktionskosten erhöht.

Die Lösung gemäß der DE-OS 38 27 497 ist daher insgesamt gesehen technisch sehr aufwendig und erreicht das Ziel einer gleichmäßigen, qualitätiv hochwertigen Folienbeschichtung bestenfalls näherungsweise.

Bei dieser Vorrichtung ist die Folie selbst in einen Spannrahmen gespannt und wird durch Kontaktwärme erwärmt; hierbei wird durch das Absaugen der Luft zwischen Werkstück und Folie die Folie von dem darüber lastenden Atmosphärendruck an das Werkstück gepreßt und um dieses geformt.

Das vorbekannte Verfahren hat jedoch den Nachteil, daß durch die Einwirkung der Heizplatte, die in der Regel aus blankem Stahl besteht, die aus Abdichtungsgründen bereits randseitig eingespannte Folie schnell aufgeheizt wird. Infolge ihres hohen Wärmeausdehnungskoeffizienten führt diese Erwärmung daher zu einer Ausdehnung, die infolge der seitlichen Einspannung notwendigerweise zur Faltenbildung und auch Blasenbildung führt.

Aus der Veröffentlichung "Die Thermoformung dünnwandiger Teile'' in PLASTVERARBEITER, Band 32, Nr. 8, Seiten 999 bis 1002, werden verschiedene Maßnahmen beschrieben (Seite 1000 in Verbindung mit Abbildung 66), um das Ankleben der Folie an der Heizplatte während des Heizvorganges zu vermeiden. In diesem Zusammenhang wird eine PTFE-Trennschicht erwähnt, die aufgesintert, als glasseiden`verstärkte Folie mittels Haftkleber aufgeklebt, oder auch aufgespannt sein kann. In letzterem Fall soll die Heizplatte etwas höher angeordnet sein als die Einspannebene der Folie. Vorhandene Lufteinschlüsse sollen hierbei in Richtung von Luftkanälen oder zum Heizplattenrand gedrückt werden und dort abfließen können.

Als Alternative hierzu wird vorgeschlagen, die PTFE-Folie in Streifenform mit feinen Zwischenkanälen aufzukleben.

Bei den zu diesem Zweck verwendeten PTFE-Folien handelt es sich um luftundurchlässige Folien, so daß bei den vorgeschlagenen Lösungen es ausschließlich von der mehr oder weniger zufälligen räumlichen Kontaktierung der Folie mit der Trennfolie abhängt, ob die gewünschte Entlüftungswirkung eintritt; in diesem Sinne sind auch die Hinweise in dieser Veröffentlichung zu verstehen, wonach eine "rauhe" PTFE-Trennschicht vorgesehen sein soll; offenbar führt diese Lösung aber auch nicht hundertprozentig zum gewünschten Erfolg, denn sonst wäre es nicht erforderlich ''zur Unterstützung des Luftabzuges'' bei der aufgeklebten Variante dieser Trennfolie noch ''feine Zwischenkanäle'' zu erzeugen. Es geht also bereits aus dieser Veröffentlichung hervor, daß die PTFE-Trennschicht, sei sie nun in aufgeklebter Version oder als aufgespannte Folie, noch zusätzlicher Maßnahmen bedarf, um eine zuverlässige Entlüftung zu erreichen.

Diese Problematik war offensichtlich bereits zum Zeitpunkt der Veröffentlichung (1981) dieser Druckschrift bekannt, ist in den letzten Jahren aber mit der zunehmenden Bandbreite von zu verarbeitenden, thermoplastischen Folien in technologischer Hinsicht noch schwieriger geworden; die zuverlässigere Vermeidung von Lufteinschlüssen und Blasen ist zwingende Voraussetzung für ein einwandfrei es Arbeitsergebnis.

Insbesondere bei weichen, thermoplastischen Folien und bei den zunehmend zum Einsatz gelangenden umweltfreundlichen Polypropylenfolien und ABS-Folien, bei denen relativ hohe Vorwärmtemperaturen erforderlich sind, führt die genannte Blasenbildung zu einer sehr ungleichmäßigen Erwärmung über die Gesamtoberfläche des Folienzuschnitts betrachtet. Dies kann im Extremfall dazu führen, daß die entsprechenden Folienbereiche dann später beim Auflegen auf das zu beschichtende Werkstück nicht oder nur ungenügend haften oder auch dort Blasen, Falten oder sonstige Unregelmäßigkeiten gebildet werden. Die Bildung von Luftblasen oder Luftpolstern führt wegen der thermischen Isolationswirkung der Luft daher mit zunehmender Verarbeitungstemperatur von modernen Beschichtungsfolien zu erheblichen Problemen bei der Anwendung der oben beschriebenen Verfahren bzw. Vorrichtungen, da keine gleichmäßige Temperaturführung über die gesamte Folienfläche und damit eine genaue Temperaturvorgabe im Sinne eines Soll-Wertes kaum möglich ist. Damit treten jedoch im Endeffekt auch beim Einsatz der beschriebenen PFTE-Trennfolien immer noch erhebliche Qualitätsprobleme auf, die sich beim Einsatz der beschriebenen Folien besonders unangenehm bemerkbar machen.

Aufgabe der Erfindung ist es daher, die vorbekannte Vorrichtung so zu modifizieren bzw. zu verbessern, daß mit günstigem apparativen Aufwand eine gleichmäßige, qualitativ hochwertige und über die Dauer einer Serienfertigung eindeutig reproduzierbare Beschichtungsqualität auch bei schwierigen Werkstücken und Folienmaterialien gewährleistet ist.

Erfindungsgemäß wird diese Aufgabe mit einer Vorrichtung gemäß dem Schutzanspruch 1 gelöst.

Der wesentliche Erfindungsgedanke besteht somit darin, in der Aufheizphase der Folie eine permanente Entlüftungsmöglichkeit durch die Maschenstruktur zu schaffen, so daß Lufteinschlüsse, die zur kritischen ungleichmässigen Erwärmung der Folie führen könnten, von Anfang an und über die gesamte Dauer der Aufheizphase vermieden werden, indem diese durch das Kunststoffgewebe hindurch nach außen "abgeleitet'' werden, d.h. indem lokale Druckerhöhungen infolge von Luftblasenbildung durch Druckausgleich mit der Umgebung sofort abgebaut werden.

Es soll betont werden, daß es sich nach wie vor ausschließlich um ein Vakuumverfahren handelt, da die bei manchen oben geschilderten Verfahren bzw. Vorrichtungen eingesetzte Membran bzw. Druckkissen entfällt und die Beaufschlagung der Teilvolumina mit geeigneten Unter-/Überdrücken ausschließlich als Steuerelement für den Beschichtungsvorgang verwendet wird.

Durch die dadurch erreichte, gleichmäßige Erwärmung der Folie ist eine genau definierte Temperaturführung über die gesamte Folie möglich, eine Blasenbildung der Folie wird verhindert; die Folie kann dann ohne Zeitverlust sofort nach Erreichen der gewünschten Temperatur, d.h. in der Regel nach Erreichen der Temperatur der Heizplatte, durch ''Umschalten'' der Druckverhältnisse mit genau dieser Temperatur um die Seitenflächen des zu beschichtenden Werkstücks gelegt werden; da die angelegte Druckdifferenz infolge der Luftdurchlässigkeit des Kunststoffgewebes unmittelbar auf die Oberfläche der Folie wirkt, ist auch gewährleistet, daß die Folie gleichmäßig auch schwierigen Strukturen wie Kanten, Nuten, Rinnen oder reliefartigen Profilierungen des Werkstücks folgen kann.

Die genau definierbare homogene Temperaturverteilung der Folie gewährleistet eine reproduzierbare Serienfertigung mit gleichmäßig hoher Qualität, insbesondere bei der Verwendung von "empfindlichen" Polypropylenfolien.

Nach der Beendigung des Formvorganges kann sofort nach dem Entspannen der Luft im oberen Teilvolumen die Presse geöffnet, entleert und neu beschickt werden, Prozeduren wie das Trennen einer Membran von den beschichteten Werkstücken entfallen. Durch die leichte Formbarkeit der Folie auch durch geringe Luftdruckunterschiede im Gegensatz zu dem größeren Druckaufwand bei Einsatz einer Membran, können auch alle vom Luftdruck belasteten Teile der Presse einfach und leicht und somit auch kostengünstig dimensioniert werden.

Ein Ausführungsbeispiel der erfindungsgemäßen Vorrichtung wird anhand von Zeichnungen näher erläutert, es zeigen:
- Fig. 1: einen Querschnitt durch die Presse im geöffneten Zustand,
- Fig. 2: einen Teil-Querschnitt (Detail X 1) durch die Presse der Figur 1,
- Fig. 3: einen Querschnitt durch die Presse beim Aufheizen der Folie an der Heizplatte, und
- Fig. 4: einen Teil-Querschnitt (Detail X 2) durch die Presse der Fig. 3.

Die Vorrichtung umfaßt eine Flachpresse mit einem festen unteren Preßtisch 32, einer unteren Trägerplatte 30, mit zwei Werkstückträgern 31A,31B für zwei zu beschichtende Werkstücke 11A,11B, mit einem oberen Rahmen 21 und mit einer Heizplatte 20.

Die Randbereiche der Trägerplatte 30 sind so dimensioniert, daß sie mit dem oberen Rahmen 21 in dem Sinne zusammenwirkt, daß mit Hilfe von umlaufenden Dichtungen 11,12 die zur Beschichtung verwendete Folie 10 zwischen diesen beiden Bauteilen eingespannt und festgehalten wird. Im nicht druckbelasteten Zustand liegt die Folie 10 daher bei geschlossener Presse horizontal über den Werkstücken 11A,11B und unterteilt den Presseninnenraum in ein oberes Teilvolumen V1 und ein unteres Teilvolumen V2.

Zur Erzeugung von Unterdruck bzw. Überdruck sind Luftkanäle 22,33 vorgesehen, die mehrere Öffnungen zu dem ihnen jeweils zugeordneten Teilvolumen aufweisen.

Im Abstand von der Heizplatte 20 ist ein doppellagiges Kunststoffgewebe 40 zwischen dem Rahmen 21 und der Heizplatte 20 gehalten. Die oberen Luftkanäle 22 sind durch den Rahmen 21 so geführt, daß ihr inneres Ende zwischen der Heizplatte 20 und der Oberseite des Kunststoffgewebes 40 endet. Es wird somit ein drittes Teilvolumen V3 gebildet, wenn die Folie 10 zur Aufwärmung über das Kunststoffgewebe 40 an die Heizplatte 20 gedrückt wird.

Im Rahmen 21 befindet sich eine Ausnehmung 21A, in der der eine Teil eines Klettverschlusses 41 untergebracht ist; der andere Teil des Klettverschlusses 41 befindet sich randseitig an dem Kunststoffgewebe 40, so daß dieses bei von der Heizplatte 20 abgehobenem Rahmen 21 leicht in letzteren eingelegt und auch wieder entnommen werden kann.

Beim dargestellten Ausführungsbeispiel besteht das Kunststoffgewebe 40 aus einem doppellagigen Polyester-Gewebe 40A, 40B, wobei die obere, der Heizplatte 20 zugewandte Gewebelage 40B die grobere Struktur hat als die untere Gewebelage 40A. Insbesondere haben die beiden Gewebelagen 40A, 40B eine unterschiedliche Maschenweite, die im Bereich von 50-200µ liegt, und auch eine unterschiedliche Dicke zwischen 0,05 und 0,2 mm, wobei die untere Gewebelage dünner ist als die obere Gewebelage. Das Verhältnis der offenen Flächen liegt zwischen 30 und 50%, wobei der größere Wert der groberen, oberen Gewebelage zugeordnet ist. Bei der Auswahl der Struktur der unteren Gewebelage 40A ist darauf zu achten, daß diese beim Aufwärmvorgang der Folie 10 flächigen Kontakt mit der Folie 10 hat, so daß bei den gegebenen Verhältnissen, insbesondere Drücken, durch entsprechende Feinstrukturierung dieser unteren Gewebelage sichergestellt sein kann, daß diese keine bleibenden Eindrücke auf der Folie 10 hinterläßt.

Anzumerken ist noch, daß bei Aufheizen der Heizplatte 20 die beiden Polyester-Gewebelagen einer Schrumpfung unterliegen, so daß eine automatische Spannung der randseitig mit dem Klettverschluß 41 fixierten Kunststoffeinlage erzielt wird.

Die Arbeitsweise dieser Presse ist wie folgt:

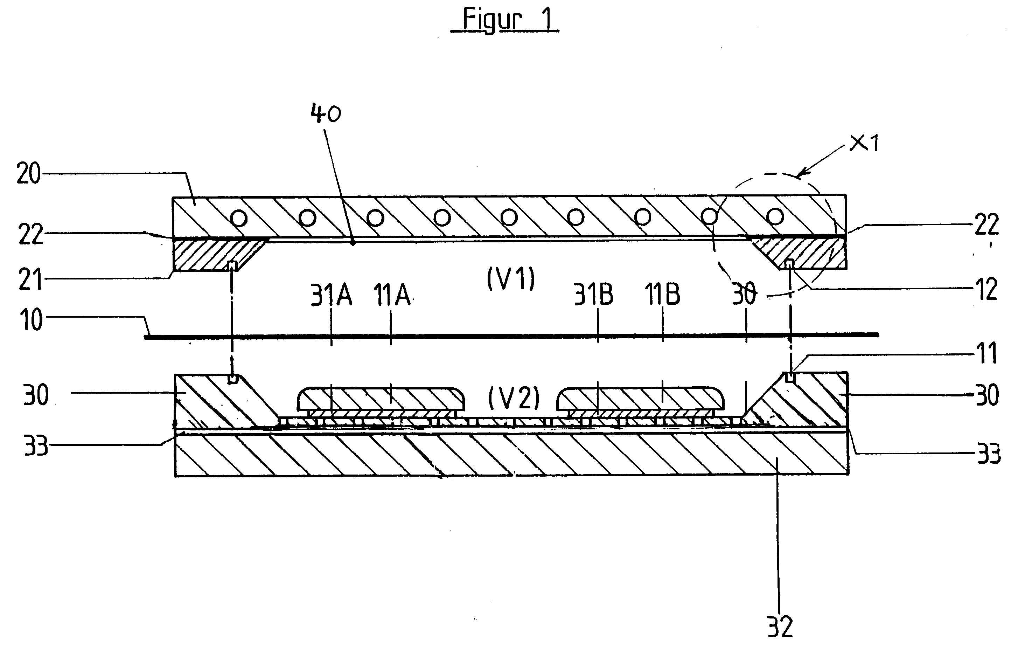

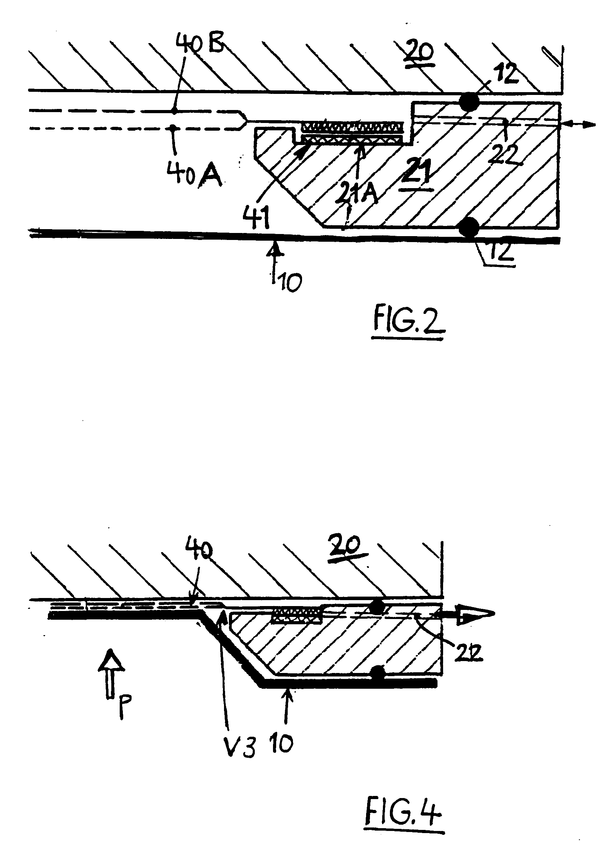

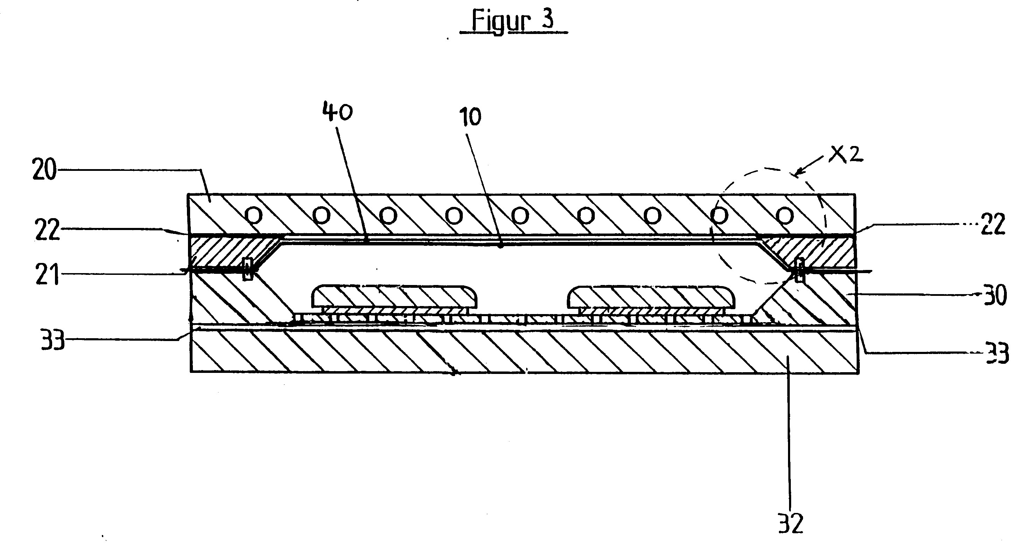

In den Zwischenraum zwischen der Trägerplatte 30 und Heizplatte 20 werden bei geöffneter Presse die zu beschichtenden Werkstücke 11A,11B auf jeweils einem Werkstückträger 31A,31B angeordnet und mit der zur Beschichtung vorgesehenen Folie 10 überdeckt (Fig. 1). Nachdem die Trägerplatte 30 derart vorbereitet ist, wird die Presse geschlossen und die Folie 10 befindet sich in der in Fig. 2 gezeigten Position. Zum Aufheizen der Folie 10 wird diese infolge einer Druckdifferenz zwischen oberem und unterem Teilvolumen V1/V2 an die Unterseite der Heizplatte gedrückt. In dieser Position wird die gesamte Folie 10 von der Heizplatte 20 gleichmäßig auf die vorgewählte optimale Verformtemperatur gebracht (Fig. 3 und 4).

Hierbei liegt die Folie 10 an der unteren Gewebelage 40A an und die obere Gewebelage 40B wird, ebenfalls unter der Wirkung der Druckdifferenz p an die Unterseite der Heizplatte 20 gedrückt. Entscheidend hierbei ist, daß Lufteinschlüsse in Form von Blasen oder ähnlichem, die sich beispielsweise zwischen Folie 10 und Heizplatte 20 andererseits bilden könnten, dadurch zuverlässig vermieden werden, daß über die Luftkanäle 22 das dritte Teilvolumen V3 jederzeit mit dem äußeren Druck in Verbindung steht.

Ein weiterer Effekt des Kunststoffgewebes besteht in einer begrenzten Vorwärmung der Folie, da diese bei Anwendung der Druckdifferenz p zunächst kurzzeitig an der unteren Gewebelage 40A anliegt, deren Temperatur unter der Temperatur der Heizplatte liegt, so daß hier eine kurze "Vorwärmphase" erreicht wird, die eine allzu abrupte Aufheizung der Folie und damit eine mögliche Ursache für Falten- und Blasenbildung vermeidet oder zumindest minimiert.

Wenn die Folie ihre optimale Formtemperatur erreicht hat, wird schließlich eine geeignete Druckdifferenz erzeugt, indem das obere Teilvolumen V1 mit Druckluft beschickt wird und das untere Teilvolumen V2 evakuiert wird. Dadurch legt sich die plastifizierte Folie exakt und konturgetreu auch um die zu beschichtenden Randbereiche der Werkstücke 11A,11B, wozu solche Druckdifferenzen zwischen den beiden Teilvolumina erforderlich sind, die ausreichen, um den Kontakt der Folie zur Heizplatte 20 zu lösen.

Nach Beendigung dieses Formvorganges kann nach dem Entspannen der Luft im oberen Teilvolumen V1 die Presse geöffnet werden und die Werkstückträger mit den fertig beschichteten Werkstücken 11A,11B aus der Presse entfernt werden.

Die erfindungsgemäße Vorrichtung schafft somit eine vollflächige Hinterlüftung der vorzuwärmenden Folie 10 auch über große Flächenbereiche, da durch die Maschenstruktur des Kunststoffgewebes eine Vielzahl von horizontal verlaufenden "Entlüftungswegen" geschaffen wird. Damit ist auch die Verarbeitung von modernen, schwierigen Folien mit hohen Aufwärmtemperaturen mit zuverlässiger Qualität möglich geworden, die sehr hohe technische Anforderungen an die Verfahrens-und Maschinentechnik richten.

## Patentansprüche

1. Vorrichtung zum Beschichten eines Werkstückes (11A,11B) mit einer Folie (10) mit einem Tisch und mindestens einem Werkstückträger (31A,31B) zur Aufnahme eines zu beschichtenden Werkstücks, einem unteren, den Werkstückträger umgebenden Rahmen (30), derart, daß ein bis unterhalb der Unterkante des zu beschichtenden Werkstückes reichendes erstes Teilvolumen (V2) gebildet wird, bei dessen Evakuierung mittels Unterdruckvorrichtungen die zur Beschichtung vorgesehene, durch Heizeinrichtungen erwärmte Folie (10) sich um das zu beschichtende Werkstück herumlegt, und mit einer oberen Heizplatte (20), die ein evakuierbares, zweites Teilvolumen (V1) luftdicht abschließt, wozu sie derart ausgebildet und geformt ist, daß die zur Beschichtung dienende Folie zwischen den Rändern der Heizplatte (20) und dem unteren Rahmen (30) derart einspannbar ist, daß sie die beiden Teilvolumina (V1,V2) voneinander zumindest im wesentlichen luftdicht abgrenzt, wenn Werkstückträger und Heizplatte in ihrer Arbeitsposition sind, wobei zwischen Heizplatte und Folie insbesondere im Abstand von der Heizplatte eine Trennschicht eingespannt ist, und wobei Luftkanäle zum Abzug der Luft zwischen dieser Trennschicht und der Folie vorgesehen sind, dadurch gekennzeichnet, daß die Trennschicht aus einem luftdurchlässigen Kunststoffgewebe (40) gebildet ist, durch dessen Massenstruktur eine Vielzahl von horizontal verlaufenden Entlüftungswegen geschaffen wird, die zusammen mit den Luftkanälen (22) den Druckausgleich des Zwischenraums (V3) zwischen Folie (10) und Heizplatte (20) mit dem Außendruck während den Arbeitsschritten zur Aufwärmung der Folie (10) bewirkt.

2. Vorrichtung nach Anspruch 1, dadurch gekennzeichnet, daß das Kunststoffgewebe (40) aus einem doppellagigen Polyester-Gewebe besteht, und daß die Maschenweite der der Heizplatte zugewandten, oberen Gewebelage (40B) größer als die der Folie (10) zugewandten, unteren Gewebelage (40A) gewählt ist.

3. Vorrichtung nach Anspruch 2, dadurch gekennzeichnet, daß die Dicke (D1) der oberen Gewebelage (40B) etwa das Dreifache der Dicke (D2) der unteren Gewebelage (40A) beträgt, beispielsweise bei D1 = 150µ und D2 = 50µ liegt.

4. Vorrichtung nach Anspruch 2, dadurch gekennzeichnet, daß die offene Fläche der Gewebelagen (40A, 40B) bei etwa 40% liegt.

5. Vorrichtung nach Anspruch 1 oder 2, dadurch gekennzeichnet, daß das Kunststoffgewebe (40) in einem randseitig umlaufenden Rahmen (21) unterhalb der Heizplatte (20) mittels eines Klett-Verschlusses (41) gehalten ist.

6. Vorrichtung nach Anspruch 1 und S, dadurch gekennzeichnet, daß die Luftkanäle (22) durch den Rahmen (21) vom Zwischenraum (V3) zwischen Heizplatte (20) und Kunststoffgewebe (40) nach außen geführt sind.

## Claims

1. Apparatus for coating a workpiece (11A,11B) with a film (10), said apparatus comprising a table and at least one workpiece carrier (31A,31B) for accommodating a workpiece to be coated, a lower frame (30) which surrounds the workpiece carrier in such a manner that a first partial volume (V2) is formed, which extends to beneath the lower edge of the workpiece to be coated, the film (10) which is provided for the coating and heated by heating means being placed around the workpiece to be coated during the evacuation of said partial volume by means of reduced-pressure devices, and an upper heating plate (20) which seals-off an evacuatable second partial volume (VI) in an airtight manner, for which purpose said plate is configured and shaped so that the film, which is used for the coating, can be secured in position between the edges of the heating plate (20) and the lower frame (30) in such a manner that it separates the two partial volumes (V1,V2) from each other in at least a substantially airtight manner when workpiece carrier and heating plate are in their operational position, a parting layer being secured in position between heating plate and film, more especially at a spacing from the heating plate, and air ducts for drawing-off the air being provided between this parting layer and the film, characterised in that the parting layer is formed from an air-permeable plastics material fabric (40) having a mass structure, by means of which a plurality of horizontally extending ventilation paths are created which, together with the air ducts (22), equalise the pressure of the intermediate volume (V3) between film (10) and heating plate (20) with the outside pressure during the operational steps to heat-up the film (10).

2. Apparatus according to claim 1, characterised in that the plastics material fabric (40) comprises a double-ply polyester fabric, and in that the mesh width of the upper fabric ply (40B), facing the heating plate, is selected to be greater than the lower fabric ply (40A) facing the film (10).

3. Apparatus according to claim 2, characterised in that the thickness (D1) of the upper fabric ply (40B) is substantially three times the thickness (D2) of the lower fabric ply (40A), for example D1 = 150µ and D2 = 50µ.

4. Apparatus according to claim 2, characterised in that the open area of the fabric plies (40A,40B) is substantially 40%.

5. Apparatus according to claim 1 or 2, characterised in that the plastics material fabric (40) is retained in a frame (21), which extends round the edge, beneath the heating plate (20) by means of a Velcro fastener (41).

6. Apparatus according to claims 1 and 5, characterised in that the air ducts (22) extend outwardly through the frame (21) from the intermediate volume (V3) between heating plate (20) and plastics material fabric (40).

## Revendications

1. Dispositif pour le revêtement d'une pièce (11A, 11B) d'une feuille (10), comportant une table et au moins un support de pièce (31A, 31B) destiné à recevoir une pièce à revêtir, un cadre inférieur (30) entourant le support de pièce, de façon telle que soit formé un premier volume partiel (V2) allant jusqu'au-dessous du bord inférieur de la pièce à revêtir, lors de la mise sous vide duquel au moyen de dispositifs de dépression, la feuille (10) prévue pour le revêtement, chauffée par des dispositifs de chauffage, s'applique autour de la pièce à revêtir, et une plaque chauffante supérieure (20) qui ferme de manière étanche à l'air un deuxième volume partiel (V1) pouvant être mis sous vide, en étant pour cela faite et formée de façon telle que la feuille servant au revêtement puisse être serrée entre les bords de la plaque chauffante (20) et le cadre inférieur (30) de façon telle qu'elle délimite les deux volumes partiels (V1, V2) l'un de l'autre de manière au moins à peu près étanche à l'air lorsque le support de pièce et la plaque chauffante sont dans leur position de travail, entre la plaque chauffante et la feuille, en particulier à distance de la plaque chauffante, étant serrée une couche de séparation, et des conduits d'air pour l'extraction de l'air étant prévus entre cette couche de séparation et la feuille, caractérisé par le fait que la couche de séparation est formée d'un tissu de plastique perméable à l'air (40) à travers la structure maillée duquel est créé un grand nombre de voies d'évacuation d'air s'étendant horizontalement qui produit conjointement avec les conduits d'air (22) l'égalisation de la pression dans l'intervalle (V3) entre la feuille (10) et la plaque chauffante (20) avec la pression extérieure pendant les opérations de chauffage de la feuille (10).

2. Dispositif selon la revendication 1, caractérisé par le fait que le tissu de plastique (40) est un tissu de polyester bicouche, et que l'ouverture de maille de la couche de tissu supérieure (40B) dirigée vers la plaque chauffante est choisie supérieure à celle de la couche de tissu inférieure (40A) dirigée vers la feuille (10).

3. Dispositif selon la revendication 2, caractérisé par le fait que l'épaisseur (D1) de la couche de tissu supérieure (40B) est à peu près le triple de l'épaisseur (D2) de la couche de tissu inférieure (40A), par exemple avec D1 = 150 µm et D2 = 50 µm.

4. Dispositif selon la revendication 2, caractérisé par le fait que la surface ouverte des couches de tissu (40A, 40B) est d'environ 40 %.

5. Dispositif selon l'une des revendications 1 et 2, caractérisé par le fait que le tissu de plastique (40) est tenu dans un cadre périphérique côté bord (21) au-dessous de la plaque chauffante (20) au moyen d'une fermeture auto-agrippante (41).

6. Dispositif selon les revendications 1 et 5, caractérisé par le fait que les conduits d'air (22) traversent le cadre (21) de l'intervalle (V3) entre la plaque chauffante (20) et le tissu de plastique (40) vers l'extérieur.
